# EUROPÄISCHE PATENTSCHRIFT

(11) **EP 1 398 137 B1**
(45) Veröffentlichungstag und Bekanntmachung des Hinweises auf die Patenterteilung: **07.11.2012**
(21) Anmeldenummer: 03019640.6
(22) Anmeldetag: 05.09.2003
(51) Int. Cl.: B32B 37/10, B29C 63/16, B30B 5/02

(54) **Laminierstempel mit einem Laminierelement aus elastischem Material, Laminierpresse und Verfahren**
Lamination stamp with an elastic element, laminating press and process of fabrication
Tampon de laminage comprenant un élément élastique, presse de laminage et procédé de fabrication

(30) Priorität: 16.09.2002 DE 10242885
(43) Veröffentlichungstag der Anmeldung: 17.03.2004
(73) Patentinhaber: Sellner GmbH, 91564 Neuendettelsau (DE)
(72) Erfinder: Engelhard, Jürgen, 91564 Neuendettelsau (DE); Sellner, Norbert, 91564 Neuendettelsau (DE); Leimeister, Thomas, 91564 Neuendettelsau (DE)
(74) Vertreter: Sperling, Rüdiger

(56) Entgegenhaltungen:
- WO-A-87/01072
- DE-A- 3 045 898
- DE-U- 9 410 329
- US-A- 5 529 658

## Beschreibung

Die vorliegende Erfindung betrifft einen Laminierstempel zum Laminieren nach dem Oberbegriff des Anspruchs 1. Insbesondere betrifft die Erfindung einen solchen Laminierstempel, der ein seitliches Auswandern eines Laminierelements weg vom zu laminierenden Objekt unterbindet.

Laminierstempel werden in Laminierpressen verwendet, um Objekte mit einer Blende im Laminierverfahren zu verbinden. Die Objekte sind üblicherweise Kernteile aus Kunststoff oder Metall, auf die aus Dekorationsgründen eine Blendenplatte aufgesetzt werden soll. Die Blendenplatte kann aus bearbeitetem Metallblech, Kunststoff, Holzfurnier oder ähnlichem bestehen. Die Laminierstempel bestehen aus einer Grundplatte als Halter, auf den ein Laminierelement, das aus Gummi oder einem ähnlichen elastischen Material besteht, aufgeklebt ist.

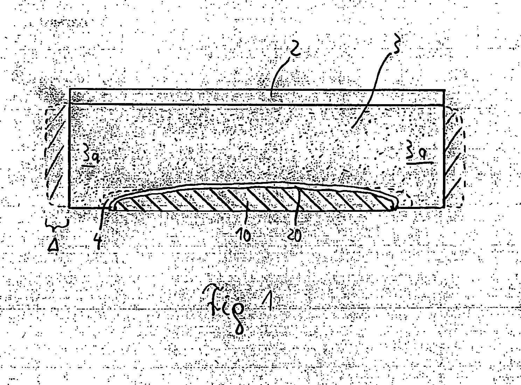

Fig. 1 zeigt einen solchen vorbekannten Laminierstempel mit einem Laminierelement 3 und einem Laminierelementhalter 2, wobei das Laminierelement 3 des weiteren eine Aussparung 4 aufweist, die von ihrer Tiefe und ihren Abmessungen her dem zu laminierenden Element, beispielsweise einer Blende 20 angepasst ist. Zum Laminieren wird der Laminierstempel so auf die Blendenplatte 20, welche auf das Kernteil 10 aufgelegt ist, aufgesetzt, dass die Blende 20 genau in der Ausformung 4 zu liegen kommt. Durch Ausüben eines Druckes, beispielsweise durch einen in Fig. 1 nicht dargestellten Stempel, werden Kernteil 10 und Blendenplatte 20 miteinander laminiert. Hierbei kommt es bei herkömmlich bekannten Laminierstempeln zu einem seitlichen Auswandern der elastischen Masse des Laminierelements 3, wie in Fig. 1 durch den gestrichelten Bereich dargestellt ist, und damit zu einer seitlichen Ausweitung der Ausformung 4, welche nicht mehr an Seitenbereichen der Blende 20, bzw. des Kernteils 10, anliegen kann.

Ein um das Kernteil herum führendes Laminieren auch der Kernteilkanten ist damit nicht möglich, da kein Druck auf diese Kanten und die entsprechenden Seitenbereiche der Blendenplatte 20 ausgeübt werden kann. Damit ist es nicht möglich, Laminatstücke herzustellen, die auch seitlich korrekt laminiert sind. Die Herstellung solcher Laminatstücke ist jedoch wünschenswert, um auch bei seitlicher Sicht auf die herzustellende Blende eine ästhetisch anmutende Ansicht auf die Blendenplatte und nicht auf das mehr funktional als ästhetisch gestaltete Kernteil zu gewähren.

Aus der DE 94 10 329 ist ein Laminierstempel nach dem Oberbegriff des Anspruchs 1 bekannt.

Es ist daher die Aufgabe der vorliegenden Erfindung, eine entsprechend verbesserte Laminierpresse und einen Laminierstempel bereit zu stellen, der auch ein Laminieren von Seitenbereichen von Laminatstücken gestattet.

Diese Aufgabe wird erfindungsgemäß gelöst durch den Laminierstempel gemäß dem unabhängigen Patentanspruch 1, die Laminierpresse gemäß dem unabhängigen Patentanspruch 6 und das Verfahren zum Laminieren gemäß dem unabhängigen Patentanspruch 9.

Weitere vorteilhafte Ausgestaltungen, Aspekte und Details der vorliegenden Erfindung ergeben sich aus den abhängigen Patentansprüchen, der Beschreibung und den beigefügten Zeichnungen.

Der Erfindung liegt das Prinzip zugrunde, das seitliche Auswandern des elastischen Laminierelementes zu begrenzen bzw. ganz zu unterbinden, um auch einen seitlichen Druck auf die Blendenplatte ausüben zu können.

Dementsprechend ist die Erfindung zunächst gerichtet auf einen Laminierstempel zum Laminieren eines Kernteils und einer Blende nach Anspruch 1.

Erfindungsgemäß soll also zum Unterbinden der unerwünschten seitlichen Bewegung des Laminierelements ein Begrenzer an das Laminierelement seitlich angelagert werden, der die Bewegung stoppt. Da eine seitliche Bewegung des Laminierelementes aus elastischem Material durch den Begrenzer verhindert wird, kann sich auch, zumindest an den begrenzten Seiten, die Ausformung nicht mehr seitlich verschieben, so dass die Ausformung auch seitlich am Seitenbereich der Blende anliegend bleibt und einen entsprechenden Druck auf diese ausüben kann. Dadurch kann auch der Seitenbereich der Blendenplatte bei Verwendung des erfindungsgemäßen Laminierstempels mit laminiert werden oder zumindest eine Form der Blendenplatte erreicht oder erhalten werden, die für die ästhetische Anmutung des gesamten Laminatstücks wünschenswert ist.

Vorteilhafterweise wird zumindest der eine seitliche Begrenzer eine Platte sein oder aufweisen, die an eine Seitenwand des Laminierelements angelagert ist und bis zur Ausformung reicht. Der Begrenzer stellt in diesem Falle also für die gesamte Seitenwand des elastischen Laminierelements zwischen Laminierelementhalter und seiner Unterseite (also der Seite mit der Aussparung) ein Widerlager dar, das die seitliche Bewegung des elastischen Laminierelements in toto unterbindet. Ein elastisches Ausweichen der Laminierelementmasse ist mithin nur noch einerseits in Richtung Blende, was dem Laminierdruck zugute kommt, und andererseits in Richtung seitlich der Laminierplatte möglich, was aufgrund der auftretenden Kräfte den Druck auf den Seitenbereich der Blende noch verbessert.

Der seitliche Begrenzer weist auch ein Druckelement auf, das seitlich an einer Seitenwand des Laminierelements im Bereich der Ausformung angeordnet ist und im Bereich seitlich der Ausformung an einer seitlichen Bewegung hindert. In diesem Fall muss der Begrenzer nicht als eine komplett die Seitenwand abdeckende Platte ausgestaltet sein, sondern kann nur an einem Teil der Seitenwand des Laminierelements anliegen. Bei Verwendung des entsprechenden Laminierstempels ist damit eine gewisse seitliche Bewegung der Teile des Seitenbereichs des elastischen Laminierelements noch möglich, die nicht von dem Druckelement des Begrenzers fixiert sind. Dies kann für bestimmte Anwendungen wünschenswert sein, sofern eine gewisse seitliche Nachgiebigkeit erhalten bleiben soll. Durch die Verhinderung einer seitlichen Bewegung im Bereich seitlich der Ausformung wird jedoch weiterhin ein seitlicher Druck auf die Seitenbereiche der Blendenplatte sichergestellt.

Der zumindest eine Begrenzer und der Laminierelementhalter können einstückig ausgeführt sein, beispielsweise können sie aus einem Metallstück geformt sein, wobei Stanzen oder Gießen beispielhafte Herstellverfahren sind. Auch andere Materialien können zur Herstellung des Begrenzers und/oder des Laminierelementhalters geeignet sein, wenn sie in der Lage sind, den auf den Laminierelementhalter ausgeübten Druck und den Druck, der vom Laminierelement an den Begrenzer weitergegeben wird, aufzunehmen, ohne über ein akzeptables Maß hinaus in ihrer Form beeinträchtigt zu werden. Besonders bevorzugt wird eine Ausführungsform, bei der an jeder Seite des Laminierelements seitliche Begrenzer angeordnet sind und Laminierelementhalter und seitliche Begrenzer eine Wanne bilden, in welche das Laminierelement bündig eingesetzt ist.

Der an die Seitenwand des Laminierelements angelagerte Begrenzer kann mit dieser verklebt sein, es ist jedoch auch möglich, dass die Seitenwand des Laminierelements und der daran angelagerte seitliche Begrenzer gegeneinander beweglich sind. Je nach Anforderung an die noch wünschenswerte und nicht mehr wünschenswerte Bewegung des Seitenbereichs des Laminierelements kann die eine oder andere Ausführungsform gewählt werden. In vielen Fällen wird eine völlige Eliminierung einer seitlichen Bewegung und damit eine zusätzliche Befestigung durch eine Verklebung oder ähnliches wünschenswert sein.

Die Erfindung ist des weiteren gerichtet auf eine Laminierpresse. Alles bezüglich des Laminierstempels oben Gesagte gilt ebenso für die Laminierpresse und umgekehrt.

Die Erfindung ist daher weiterhin gerichtet auf eine Laminierpresse gemäß Anspruch 6.

Der Druckerzeuger wird in der Regel ein Stößel sein, der auf den Laminierelementhalter einwirkt.

Insbesondere kann die Laminierpresse eine standardisierte Presse üblicher Bauart beinhalten, die sich jedoch von dieser darin unterscheidet, dass der erfindungsgemäße Laminierstempel in sie eingesetzt ist.

Schließlich ist die Erfindung auf ein Verfahren nach Anspruch 9.

Die Erfindung ist ebenfalls gerichtet auf ein Verfahren zum Laminieren einer Blendenplatte auf ein Kernteil mit den folgenden Schritten:
Einsetzen eines Kernteils in einen Werkstückhalter;
Aufbringen eines Klebemittels und einer Blendenplatte, die das Kernteil bedeckt und zumindest einen Seitenbereich aufweist, der an zumindest einer Kante des Kernteils anlagerbar ist;
Aufsetzen eines erfindungsgemäßen Laminierstempels mit seiner Ausformung auf die Blendenplatte; und
Beaufschlagen eines Drucks auf den Laminierelementhalter, wodurch die Blendenplatte auf das Kernteil laminiert wird und durch den zumindest einen Begrenzer die seitliche Bewegung des Laminierelements weg von der zumindest einen Kante des Kernteils, an welche der Seitenbereich der Blendenplatte anlagerbar ist, so verhindert wird, dass der zumindest eine Seitenbereich der Blendenplatte in Kontakt mit der Kante des Kernteils kommt oder bleibt.

Das Verfahren kann des weiteren so modifiziert werden, dass das Klebemittel auf die zumindest eine Kante des Kernteils aufgebracht wird, an die der Seitenbereich der Blendenplatte anlagerbar ist, und durch das Beaufschlagen des Drucks der Seitenbereiche der Kante laminiert wird. Auf diese Weise kann erreicht werden, dass auch der Seitenbereich nicht nur in einer entsprechenden Form bleibt, sondern durch den Laminierprozess diese Form auch erhalten bleiben kann, wenn beispielsweise durch Temperaturveränderungen etc. das Laminatprodukt gewissen Bewegungen ausgesetzt ist.

In einer weiteren bevorzugten Ausführungsform kann der Seitenbereich der Blendenplatte mit einer Hauptfläche der Blendenplatte fluchten, wenn die Blendenplatte auf das Kernteil aufgebracht wird, wobei der zumindest eine Seitenbereich durch den beaufschlagten Druck durch den Laminierstempel so gebogen wird, dass er sich an die zumindest eine Kante des Kernteils anlagert. In diesem Fall muss die Blendenplatte aus einem Material bestehen, welches durch Druck des Laminierelements verbogen werden kann. Es wird am Beginn des Prozesses eine Blendenplatte eingelegt, welche eben oder nur gering gewölbt ist, jedenfalls an ihrem Seitenbereich keine Umwölbung aufweist. Erst durch den Druck, der durch das Laminierelement auf die Blendenplatte während des Laminierens ausgeübt wird, wird der Seitenbereich der Blendenplatte in die endgültige Form umgebogen und lagert sich an die Kante des Kernteils an. Auf diese Weise kann, ein geeignetes Material für die Blendenplatte vorausgesetzt, ein Bearbeitungsschritt eingespart werden, da ein vorheriges Herstellen eines umgeknickten Seitenbereichs in der Blendenplatte nicht notwendig ist.

Im folgenden soll die Erfindung anhand konkretisierter Ausführungsbeispiele beschrieben werden, wobei auf die beigefügten Zeichnungen Bezug genommen wird, in denen folgendes dargestellt ist:
- Fig. 1: zeigt einen konventionellen Laminierstempel mit einem in der dortigen Ausformung befindlichen Laminierstück;
- Fig. 2: zeigt eine erste Ausführungsform eines Laminierstempels gemäß der vorliegenden Erfindung;
- Fig. 3: zeigt ein Detail des Seitenbereichs der Blendenplatte und des Kernteils zur Verdeutlichung des gewünschten seitlichen Anlagerns des Seitenbereichs an den Kernteil; und
- Fig. 4: zeigt in Aufsicht eine weitere Ausführungsform eines Laminierstempels gemäß der vorliegenden Erfindung.

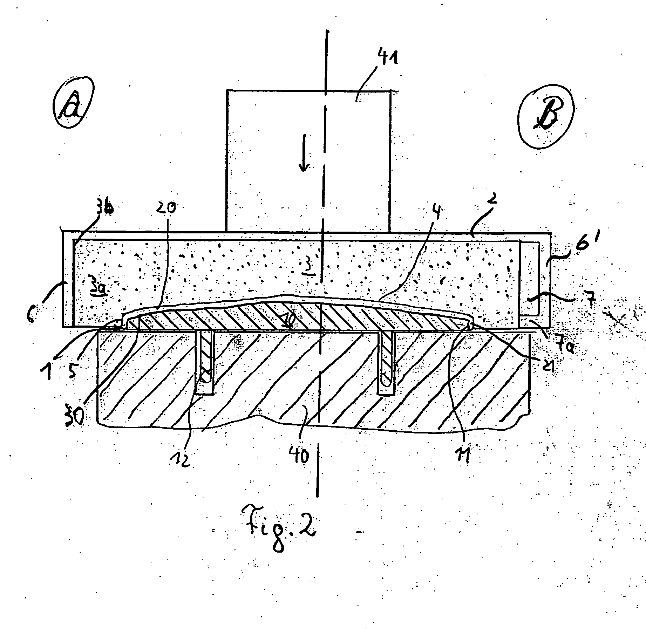

In Fig. 2 sind zwei alternative Ausführungsbeispiele A und B dargestellt. In A ist ein zu laminierendes Werkstück gezeigt, welches aus einem Kernteil 10, einer Blende 20 und einer dazwischen befindlichen Schicht eines Klebemittels besteht. Die Anordnung ist auf einen geeigneten Werkstückhalter 40 aufgesetzt, wobei die Darstellung des Werkstückhalters in Fig. 2 nur beispielhaft ist. Das Kernteil 10 weist neben seinem Hauptelement eine Kante 11 sowie Halter 12 zur späteren Befestigung des fertigen Laminatstücks auf einem Untergrund auf. Der erfindungsgemäß gearbeitete Laminierstempel ist auf die Blende aufgesetzt. Die Blende kann aus jedem geeigneten Material bestehen, z.B. aus Furnierholz, einer Dekorplatte aus Metall oder Kunststoff oder auch ein Gewebe, Leder oder Folie oder eine sonstige Kaschierung.

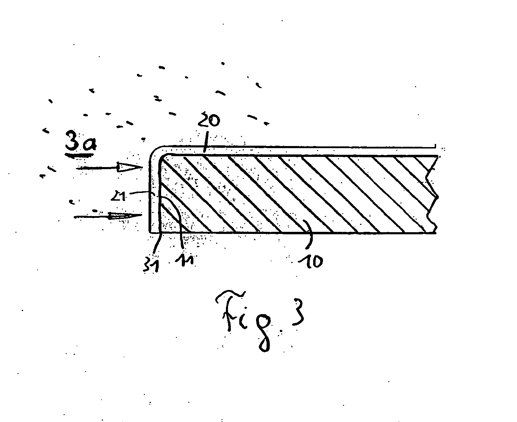

Er besteht aus einer Halteplatte 2, einem elastischen Laminierelement 3 mit Seitenbereichen 3a und Seitenwandflächen 3b. Im Laminierelement 3 ist eine Ausformung 4 vorgesehen, welche von ihrer Form und Dimension her exakt der Form des Werkstücks das laminiert werden soll, entspricht. Auch die Ausformung 4 weist Seitenbereiche 5 auf, welche einen Druck auf Seitenbereiche 21 des Kernteils 10 ausüben sollen. Um ein seitliches Ausweichen insbesondere der Seitenbereiche 3a des Laminierelements 3 beim Ausüben eines Drucks des Stempels 41 auf die Halteplatte 2 zu verhindern, sind Begrenzer 6 vorgesehen, die exakt an die Seitenwandfläche 3b des Laminierelements angrenzen und mit dem Laminierelementhalter 2 verschweißt, verklebt oder in anderer geeigneter Weise verbunden sind. Die im Bereich einer Innenkante 5 des Laminierelements 3 dargestellten Pfeile (siehe auch Fig. 3) sollen die Druckverhältnisse erläutern, welche im elastischen Laminierelement 3 auftreten, wenn die Blende 20 auf das Kernteil 10 auflaminiert wird. Wie ersichtlich, üben Bereiche 3a des Laminierelements 3 einen Druck in Richtung auf den Seitenbereich 21 aus, so dass auch dort eine Formexaktheit und bei zwischengefügtem Klebstoff ein Laminieren erreicht werden kann.

Im rechten Bereich der Fig. 2 ist eine Ausführungsvariante B gezeigt, bei der statt eines plattenförmigen Begrenzers 6 ein Begrenzer 6' verwendet wird, der einen Druckbereich 7a aufweist, der sich in etwa auf Höhe der Ausformung 4 des Laminierelements 3 befindet und der ein seitliches Ausweichen der seitlichen Bereiche des Laminierelements 3 genauso wie eine Platte 6 als Begrenzer verhindern kann. Hier ist es jedoch möglich, dass weiter von der Ausformung 4 entfernte Bereiche des Laminierelements 3 noch eine seitliche Bewegung erfahren können. Dies wird durch eine definierte Wahl des Freiraums 7 ermöglicht, der eine vorbestimmte Aufnahmekapazität für ausweichendes Material des Laminierelements 3 aufweist, bevor ein erhöhter Druckaufbau auf den Seitenbereich des Werkstücks entsteht.

Fig. 3 zeigt ein Detail des zu lamierenden Werkstücks. Das Kernteil 10 weist eine Kante 11 auf, die beim fertig laminierten Stück mit Klebemittel 31 mit dem Seitenbereich 21 der Blende 20 laminiert ist. Auf diese Weise lässt es sich erreichen, dass auch am seitlichen Bereich des Laminatstücks die Blende sicher laminiert ist, so dass der optische Eindruck verbessert und die Haltbarkeit des Laminatstücks vergrößert werden kann, da ein Abstehen vermieden wird.

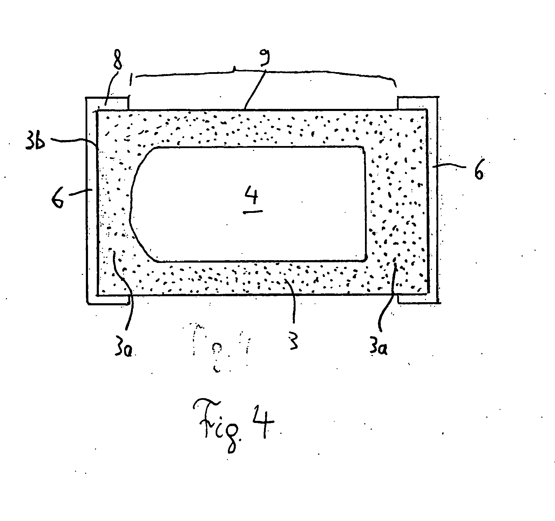

Fig. 4 zeigt die Untersicht auf einen erfindungsgemäßen Laminierstempel, wobei gleiche Bezugszeichen gleiche Elemente der Erfindung bezeichnen. Die beispielhaft ovalartig ausgebildete Ausformung 4 befindet sich hier in etwa in der Mitte des Laminierelements 3. Die seitlichen Begrenzer 6, die hier auf zwei Seiten dargestellt sind, weisen zusätzliche Umlaufbereiche 8 auf, welche an den anderen Seitenkanten des Laminierelements 3 anstoßen und in Verbindung mit dem Begrenzer 6 stehen. Auf diese Weise kann die Stabilität des Begrenzers weiter erhöht werden, da auch seitliche Auswanderungsbewegungen in Richtung auf die nunmehr vorhandenen Umlaufbereiche 8 verhindert werden können. Die Umlaufbereiche 8 können jeweils über die gesamte Seitenkante 9 verlängert werden, so dass sich dadurch insgesamt eine Wannenstruktur des Laminierelementhalters 2 und des Begrenzers 6, 8 ergibt und so bei Bedarf auch ein seitlicher Druck über die gesamte Länge gestellt werden kann.

## Patentansprüche

1. Laminierstempel zum Laminieren eines Werkstücks, das zumindest aus einem Kernteil (10) und einer Blende (20) besteht, die das Kernteil bedeckt, und das zumindest einen Seitenbereich (21) aufweist, an den zumindest ein Teil der Blende anlagerbar ist, mit
einem Laminierelement (3) aus elastischem Material, mit einem Laminierelementhalter (2), an dem zumindest ein seitlicher Begrenzer (6, 6', 8) zum Unterbinden einer seitlichen Bewegung (Δ) des elastischen Materials des Laminierelements (3) weg von zumindest einer Kante (11) im Seitenbereich (21) des Kernteils (10) angeordnet ist, an welchem ein Teil der Blende (20) auszulaminieren ist, **dadurch gekennzeichnet, dass**
- eine Ausformung (4) für das Werkstück in dem Laminierelement (3) ausgebildet ist, und dass
- zwischen dem zumindest einen Begrenzer (6, 6', 8) und dem Laminierelement (3) ein Freiraum (7) ausgebildet ist, wobei
- der zumindest eine seitliche Begrenzer (6, 6', 8) ein Druckelement (7a) aufweist, das gegenüber einer Seitenwand (3b) des Laminierelements (3) im Bereich der Ausformung (4) angeordnet ist und das elastische Material in dem genannten Bereich seitlich der Ausformung (4) an einer seitlichen Bewegung hindert.

2. Laminierstempel gemäß Anspruch 1, **dadurch gekennzeichnet, dass** der zumindest eine seitliche Begrenzer eine Platte (6) aufweist, die an eine Seitenwandfläche (3b) des Laminierelements (3) angelagert ist.

3. Laminierstempel gemäß einem der Ansprüche 1 bis 2, **dadurch gekennzeichnet, dass** an jeder Seite des Laminierelements (3) seitliche Begrenzer (6, 6', 8) angeordnet sind und Laminierelementhalter (2) und seitliche Begrenzer (6, 6', 8) eine Wanne bilden, in welche das Laminierelement (3) bündig eingesetzt ist.

4. Laminierstempel gemäß einem der Ansprüche 1 bis 3, **dadurch gekennzeichnet, dass** der an die Seitenwand (3b) des Laminierelements (3) angelagerte zumindest eine Begrenzer (6, 6', 8) mit dieser verklebt ist.

5. Laminierstempel gemäß einem der Ansprüche 1 bis 3, **dadurch gekennzeichnet, dass** die Seitenwand (3b) des Laminierelements (3) und der daran angelagerte zumindest eine seitliche Begrenzer (6, 6', 8) gegeneinander beweglich sind.

6. Laminierpresse zum Laminieren einer Blende (20) mit einem Kernteil (10), aufweisend: einen Werkstückhalter (40) zur Aufnahme eines zu laminierenden Kernteils (10);
einen Druckerzeuger (41) zur Erzeugung eines Drucks in Richtung auf den Werkstückhalter (40);
**gekennzeichnet durch**
einen Laminierstempel nach einem der Ansprüche 1 bis 5, der zwischen Werkstückhalter (40) und Druckerzeuger (41) eingesetzt ist.

7. Laminierpresse gemäß Anspruch 6, **dadurch gekennzeichnet, dass** der Druckerzeuger (41) ein Stößel ist.

8. Laminierpresse gemäß Anspruch 6 oder 7, **dadurch gekennzeichnet, dass** die Laminierpresse eine standardisierte Presse ist, in die der Laminierstempel eingesetzt ist.

9. Verfahren zum Laminieren einer Blende (20) auf ein Kernteil (10) mit den folgenden Schritten:
- Einsetzen eines Kernteils (10) in einen Werkstückhalter (40);
- Aufbringen eines Klebemittels (30) und einer Blende (20), die das Kernteil (10) bedeckt und zumindest einen Seitenbereich (21) aufweist, der an zumindest eine Kante (11) des Kernteils (10) anlagerbar ist;
- Aufsetzen eines Laminierstempels nach einem der Ansprüche 1 bis 5, mit seiner Ausformung (4) auf die Blende; und
- Beaufschlagen eines Drucks auf den Laminierelementhalter (2), wodurch die Blende (20) auf das Kernteil (10) laminiert wird und durch den zumindest einen Begrenzer (6, 6', 8) die seitliche Bewegung des Laminierelements (3) weg von der zumindest einen Kante (11) des Kernteils (10), an welche der Seitenbereich (21) der Blende (20) anlagerbar ist, so verhindert wird, dass der zumindest eine Seitenbereich (21) der Blende (20) in Kontakt mit der Kante (11) des Kernteils (10) kommt oder bleibt.

10. Verfahren gemäß Anspruch9, **dadurch gekennzeichnet, dass** das Klebemittel (30, 31) auch auf die zumindest eine Kante (11) des Kernteils (10) aufgebracht wird, an die der Seitenbereich (21) der Blende (20) anlagerbar ist, und durch das Beaufschlagen des Drucks der Seitenbereich (12) mit der Kante (11) laminiert wird.

11. Verfahren gemäß Anspruch 9oder10, **dadurch gekennzeichnet, dass** der Seitenbereich (21) der Blende (20) mit einer Hauptfläche der Blende (20) fluchtet, wenn die Blende (20) auf das Kernteil (10) aufgebracht wird, und dass der zumindest eine Seitenbereich (21) durch den beaufschlagten Druck durch den Laminierstempel so gebogen wird, dass er sich an die zumindest eine Kante (11) des Kernteils (10) anlagert.

## Claims

1. Lamination stamp for laminating a workpiece which consists at least of a core part (10) and a cover (20) which covers the core part, and comprises at least one side region (21) to which at least part of the cover can be attached, comprising a lamination element (3) made of resilient material, comprising a lamination element holder (2) on which at least one lateral limiter (6, 6', 8) is arranged to prevent a lateral movement (Δ) of the resilient material of the lamination element (3) away from at least one edge (11) In the side region (21) of the core part (10), on which part of the cover (20) Is to be laminated, **characterised In that**
- a moulding (4) for the workpiece is formed In the lamination element (3), and **in that**
- a free space (7) Is formed between the at least one limiter (6, 6', 8) and the lamination element (3),
- the at least one lateral limiter (6, 6', 8) comprising a pressure element (7a) which is arranged opposite a side wall (3b) of the lamination element (3) In the region of the moulding (4) and prevents lateral movement of the resilient material in said region on the side of the moulding (4).

2. Lamination stamp according to claim 1, **characterised In that** the at least one lateral limiter comprises a plate (6) which is attached to a side wall face (3b) of the lamination element (3).

3. Lamination stamp according to either claim 1 or claim 2, **characterised in that** lateral limiters (6, 6', 8) are arranged on each side of the lamination element (3), and the lamination element holder (2) and lateral limiters (6, 6', 8) form a trough Into which the lamination element (3) Is Inserted In a flush manner.

4. Lamination stamp according to any of claims 1 to 3, **characterised In that** the at least one limiter (6, 6', 8) which is attached to the side wall (3b) of the lamination element (3) is adhesively bonded to said side wall.

5. Lamination stamp according to any of claims 1 to 3, **characterised in that** the side wall (3b) of the lamination element (3) and the at least one lateral limiter (6, 6', 8) attached thereto can be moved relative to each other.

6. Lamination press for laminating a cover (20) to a core part (10), comprising: a workpiece holder (40) for receiving a core part (10) to be laminated; a pressure producer (41) for producing a pressure In the direction of the workpiece holder (40); **characterised by** a lamination stamp according to any of claims 1 to 5 which is Inserted between the workpiece holder (40) and the pressure producer (41).

7. Lamination press according to claim 6, **characterised In that** the pressure producer (41) is a slide.

8. Lamination press according to either claim 6 or claim 7, **characterised In that** the lamination press is a standardised press Into which the lamination stamp is inserted.

9. Method for laminating a cover (20) onto a core part (10), comprising the following steps:
- inserting a core part (10) into a workpiece holder (40);
- applying an adhesive (30) and a cover (20) which covers the core part (10) and comprises at least one side region (21) which can be attached to at least one edge (11) of the core part (10);
- positioning a lamination stamp according to any of claims 1 to 5 with Its moulding (4) on the cover; and
- applying a pressure to the lamination element holder (2), whereby the cover (20) is laminated onto the core part (10) and the lateral movement of the lamination element (3) away from the at least one edge (11) of the core part (10), to which edge the side region (21) of the cover (20) can be attached, is prevented by the at least one limiter (6, 6', 8) in such a way that the at least one side region (21) of the cover (20) comes Into contact or remains in contact with the edge (11) of the core part (10).

10. Method according to claim 9, **characterised In that** the adhesive (30, 31) is also applied to the at least one edge (11) of the core part (10), to which edge the side region (21) of the cover (20) can be attached, and the side region (12) Is laminated to the edge (11) by applying the pressure.

11. Method according to either claim 9 or claim 10, **characterised In that** the side region (21) of the cover (20) Is flush with a main face of the cover (20) when the cover (20) Is applied to the core part (10), and **In that** the at least one side region (21) Is bent by the pressure applied by the lamination stamp In such a way that it is attached to the at least one edge (11) of the core part (10).

## Revendications

1. Tampon de laminage pour le laminage d'une pièce d'usinage qui se compose d'une partie de coeur (10) et d'un diaphragme (20) qui recouvre la partie de coeur, et qui présente au moins une zone latérale (21), à laquelle est applicable au moins une partie du diaphragme, comprenant
un élément de laminage (3) en matériau élastique avec un support d'élément de laminage (2), contre lequel au moins un limiteur latéral (6, 6', 8) est disposé pour interdire un mouvement latéral (Δ) du matériau élastique de l'élément de laminage (3) en s'éloignant d'au moins un bord (11) dans une zone latérale (21) de la partie de coeur (10), sur laquelle une partie diaphragme (20) doit être laminée
**caractérisé en ce qu'**
- une déformation (4) pour la pièce d'usinage est réalisée dans l'élément de laminage (3), et **en ce qu'**
- entre au moins un limiteur (6, 6', 8) et l'élément de laminage (3), Il est réalisé un espace libre (7),
- l'au moins un limiteur latéral (6, 6', 8) présentant un élément de pression (7a), qui est disposé en face d'une paroi latérale (3b) de l'élément de laminage (3) dans la zone de déformation (4), et qui entrave le matériel élastique dans un déplacement latéral dans ladite zone sur le côté de la déformation (4).

2. Tampon de laminage selon la revendication 1, **caractérisé en ce que** l'au moins un limiteur latéral présente une plaque (6) qui est logée contre une surface de paroi latérale (3b) de l'élément de laminage (3).

3. Tampon de laminage selon l'une des revendications 1 à 2, **caractérisé en ce que** de chaque côté de l'élément de laminage (3), Ils sont disposé des limiteurs latérales (6, 6', 8), et des supports d'élément de laminage (2) et des limiteurs latérales (6, 6', 8) forment une cuvette dans laquelle l'élément de laminage (3) est introduit affleure.

4. Tampon de laminage selon l'une des revendications 1 à 3, **caractérisé en ce que** l'au moins un limiteur (6, 6', 8) placé contre la paroi latérale (3b) de l'élément de laminage (3) est collé à cette dernière.

5. Tampon de laminage selon l'une des revendications 1 à 3, **caractérisé en ce que** la paroi latérale (3b) de l'élément de laminage (3) et l'au moins un limiteur latéral (6, 6', 8) logé sur cette dernière sont mobiles l'une par rapport à l'autre.

6. Presse de laminage pour le laminage d'un diaphragme (20) avec une partie de coeur (10), présentant un support de pièce d'usinage (40) pour le logement d'une partie de coeur (10) à laminer ;
un générateur de pression (41) pour la génération d'une pression en direction du support de pièce d'usinage (40),
**caractérisée par**
un tampon de laminage selon l'une des revendications 1 à 5, qui est inséré entre le support de pièce d'usinage (40) et le générateur de pression (41).

7. Presse de laminage selon la revendication 8, **caractérisé en ce que** le générateur de pression (41) est un poinçon.

8. Presse de laminage selon la revendication 6 ou 7, **caractérisée en ce que** la presse de laminage est une presse standardisée dans laquelle est inséré un tampon de laminage.

9. Procédé pour le laminage d'un diaphragme (20) sur une partie de coeur (10) avec les étapes suivantes :
- Insertion d'une partie de coeur (10) dans un support de pièce d'usinage (40) ;
- application d'un adhésif (30) et d'un diaphragme (20) qui recouvre la partie de coeur (10) et présente au moins une zone latérale (21), qui est applicable sur au moins un bord (11) de la partie de coeur (10) ;
- placement d'un tampon de laminage selon l'une des revendications 1 à 5 avec sa déformation (4) sur le diaphragme, et
- application d'une pression sur le support d'élément de laminage (2), le diaphragme (20) étant ainsi laminé sur la partie de coeur (10) et le mouvement latéral de l'élément de laminage (3) étant ainsi entrave par l'au moins un limiteur (6, 6', 8) en s'écartant d'au moins un bord (11) de la partie de coeur (10), bord contre lequel la zone latéral (21) du diaphragme (20) peut être applicable, de sorte qu'au moins une zone latérale (21) du diaphragme (20) vient ou reste en contact avec le bord (11) de la partie de coeur (10).

10. Procédé selon la revendication 11, **caractérisé en ce que** l'adhésif (30, 31) est également appliqué sur l'au moins un bord (11) de la partie de coeur (10), bord contre lequel la zone latérale (21) du diaphragme (20) est applicable, et la zone latérale (12) est laminée avec le bord (11) par l'Impact de la pression.

11. Procédé selon la revendication 9 ou 10, **caractérisé en ce que** la zone latérale (21) du diaphragme (20) est alignée avec une surface principale du diaphragme (20) quand le diaphragme (20) est appliqué sur la partie de coeur (10), et **en ce que** l'au moins une zone latérale (21) est cintrée par la pression appliquée par le tampon de laminage qu'elle vient s'appliquer contre au moins un bord (11) de la partie de coeur (10),
